# EUROPEAN PATENT SPECIFICATION

(11) **EP 4 038 432 B1**
(45) Date of publication and mention of the grant of the patent: **25.11.2026**
(21) Application number: 21855686.8
(22) Date of filing: 22.07.2021
(51) Int. Cl.: G02B 13/00, G02B 13/02, G02B 27/64, G03B 17/17, G03B 30/00, G02B 26/08, G03B 5/00, G03B 17/12, H04N 23/45, H04N 23/55, H04N 23/58, H04N 23/68, G02B 7/08, G02B 7/09

(54) **OPTICAL IMAGE STABILISATION IN A SCANNING FOLDED CAMERA**
OPTISCHE BILDSTABILISIERUNG BEI EINER GEFALTETEN ABTASTKAMERA
STABILISATION OPTIQUE D'IMAGE DANS UN DISPOSITIF DE PRISE DE VUE À BALAYAGE PLIÉ

(30) Priority: 12.08.2020 US 202063064565 P
(43) Date of publication of application: 10.08.2022
(73) Proprietor: Corephotonics Ltd., 6492103 Tel Aviv (IL)
(72) Inventor: GOLDENBERG, Ephraim, 7751025 Ashdod (IL); COHEN, Noy, 6912529 Tel Aviv (IL); KOWAL, Yiftah, 7627603 Rehovot (IL)
(74) Representative: Kasche & Partner
(86) International application number: PCT/IB2021/056617
(87) International publication number: WO 2022/034402

(56) References cited:
- WO-A1-2019/155289
- US-A1- 2010 283 842
- US-A1- 2015 370 040
- US-A1- 2018 024 329
- US-A1- 2019 102 647
- US-A1- 2019 121 216
- US-A1- 2019 387 144
- US-A1- 2019 394 396
- US-A1- 2020 174 232
- US-B2- 10 578 948
- US-B2- 9 927 600
- "Mathematical Methods for Physicists: A Comprehensive Guide", 1 January 2013, ELSEVIER, ISBN: 978-0-12-384654-9, article GEORGE B ARFKEN: "Mathematical Methods for Physicists: A Comprehensive Guide", pages: 195 - 196, XP093159030

## Description

### CROSS REFERENCE TO RELATED APPLICATIONS

This application claims the benefit of priority from U.S. provisional patent application No. 63/064,565 filed August 12, 2020.

### FIELD

Examples disclosed herein relate in general to digital cameras and in particular to correction of images obtained with folded digital cameras.

### BACKGROUND

Compact digital cameras having folded optics, also referred to as "folded cameras" are known, see e.g. co-owned international patent application PCT/IB2016/057366. In handheld electronic devices (also referred to herein as "handheld devices") such as smartphones, tablets etc. a folded Tele camera is often part of a multi-camera and accompanied by one or more additional cameras, e.g. an Ultra-wide camera and a Wide camera. An Ultra-wide camera has a larger field of view (FOV_{UW}) than a Wide camera, which has a larger FOV_{W} than a folded Tele camera having FOV_{T} (assuming similar image sensor sizes).

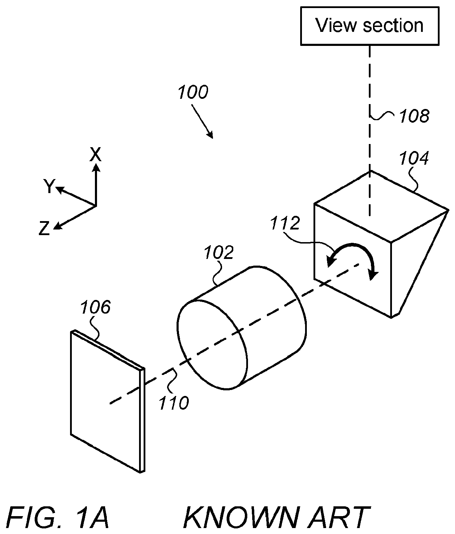

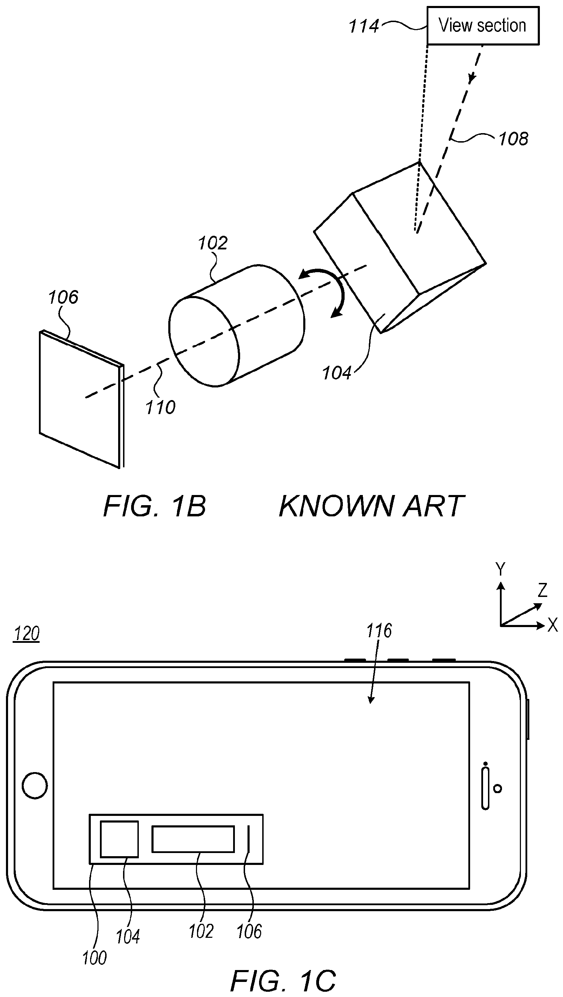

FIG. 1A shows schematically a folded Tele camera numbered **100** from a perspective view. Camera **100** includes a lens **102** with a lens optical axis **110,** an optical path folding element (OPFE) **104** and an image sensor **106.** OPFE **104** folds a first optical path along an axis **108** substantially parallel to the X axis from an object, scene or panoramic view section **114** into a second optical path along an axis **110** substantially parallel to the Z axis. Camera **100** is designed to rotate OPFE **104** around axis **110** (the X axis) relative to the image sensor, i.e. in the Y-Z plane, a rotation indicated by an arrow **112.** That is, folded Tele camera **100** is a "scanning" folded Tele camera ("STC"). FIG. 1B shows OPFE **104** after rotation by 30 degrees from the zero position.

FIG. 1C shows a handheld device **120** including a STC **100** having lens **102,** OPFE **104** and image sensor **106** in a top view. A device normal ("N") is orthogonal to a screen **116** of device **120** and points towards the observer. The camera's optical axis is parallel to the X axis. In other examples, STC **100** may be included in **120** so that the camera's optical axis is parallel to the Y axis.

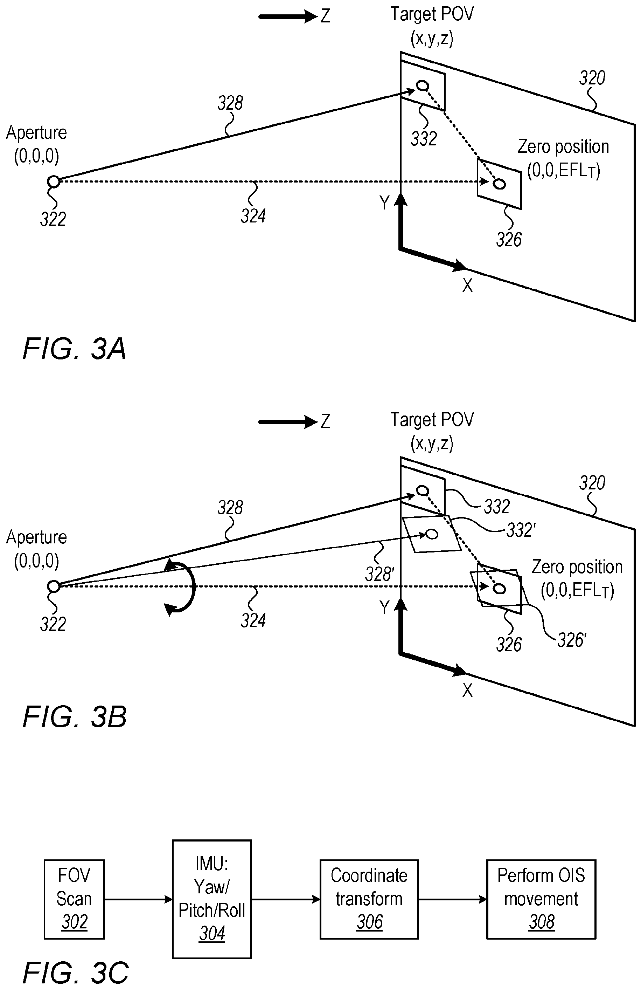

Images are acquired from a certain point of view (POV) of a camera. The POV is the direction defined by the vector that has the location of a camera's aperture as starting point and an object point at the center of the FOV as end point (see FIG. 3A, with two POV vectors **324** and **328** corresponding to two FOV_{T}s **326** and **332**). Instead of POV vector, one may also speak of the FOV center direction vector (FOVCD). As an example, in spherical coordinates (r, θ, φ) defined according to the ISO convention, the POV for a camera at r = 0 is defined by (1, θ, φ), with the polar angle θ and azimuthal angle φ defining the location of the object point at the center of the Tele FOV. The length of the POV vector may be 1 (unit vector) or may have some constant length (e.g. EFL) or may have a varying length e.g. so that it comes to lie on a specific plane.

As e.g. described in the co-owned PCT Patent Application No. PCT/ IB2016/057366 and with reference to FIGS. 1A-1B, rotation of the OPFE may be performed around the X axis and around the Y axis for "scanning" with the FOV in 2 dimensions (2D) in FIGS. 1A-1B.

Modern cameras that are included in handheld devices often include optical image stabilization (OIS) for mitigating undesired camera motion caused by a user's hand motion (often referred to as "hand-shake"). For OIS, optical components are moved to reduce movements of imaged objects on a camera's image sensor. The lens module and/or the image sensor and/or the OPFE and/or the entire camera can be moved. An inertial measurement unit (IMU) included in the handheld device provides motion data along 6 degrees of freedom, namely and with reference to FIG. 1C, linear movements in X-Y-Z, roll "tilt about" (or "tilt around") the Z axis, yaw (tilt around the Y axis) and pitch (tilt around the X axis). Usually, OIS is provided for Pitch and Yaw rotation compensation only, and not for roll rotation, as Pitch and Yaw rotation account for the major share of image deterioration caused by hand-shake. Coordinate systems of the IMU, of a regular (i.e. a non-scanning) camera and of the including handheld device can be aligned and do not evolve in time. For a STC, this is not valid. The relation between a handheld device's coordinate system and that of a STC does change when FOV scanning is performed. Therefore, OIS as known in the art cannot be used for hand motion compensation in a STC.

US20190394396A1 discloses cameras with panoramic scanning range comprising a folded digital camera in which an optical path folding element (OPFE) that folds a first optical path from an object or scene into a second optical path substantially parallel with an optical axis of a lens of the folded camera, the OPFE being rotatable around the lens optical axis, and systems incorporating such cameras.

US20180024329A1 discloses compact folded camera modules having auto-focus (AF) and optical image stabilization (OIS) capabilities and multi-aperture cameras including such modules. In an embodiment, a folded camera module includes an optical path folding element (OPFE) for folding light from a first optical path with a first optical axis to a second optical path with a second optical axis perpendicular to the first optical axis, an image sensor and a lens module carrying a lens with a symmetry axis parallel to the second optical axis. The lens module can be actuated to move in first and second orthogonal directions in a plane perpendicular to the first optical axis, the movement in the first direction being for auto-focus and the movement in the second direction being for OIS. The OPFE can be actuated to tilt for OIS.

WO2019155289A1 discloses folded digital camera comprising a lens having a lens optical axis, an image sensor and first and second optical path folding elements (OPFEs), in which the second OPFE is closest to the image sensor, wherein the lens is operative to move in a first direction substantially parallel to the lens optical axis and in a second direction substantially perpendicular to first and second optical paths, wherein the second OPFE is operative to move in the first direction, and wherein the combined motion of the lens and of the second OPFE is operative to provide focus and to compensate for tilts of the camera around the first and second directions.

US20100283842A1 discloses a method and system for monitoring a field of regard. At least a part of a field of regard is imaged by concurrently collecting a plurality of light components propagating from a plurality of zones, respectively, located within the field of regard, a combined collected light beam is produced, and corresponding data is generated being indicative of a combined image of the at least part of the field of regard formed by the collected light components. This image data indicative of the combined image data is processed and analyzed, and if existence of a certain condition or event is identified in the image data, a corresponding control signal is generated.

There is a need for and it would be advantageous to have OIS for scanning folded Tele cameras.

### SUMMARY

Henceforth and for simplicity, the terms "electronic device", "electronic handheld device" "handheld device" or just "device" are used interchangeably. Henceforth and for simplicity, the term "smartphone" may be used to represent all electronic handheld devices having scanning folded cameras and implementing methods for OIS in such cameras described herein.

In various embodiments, there are provided folded Tele cameras according to claims 1 and 8.

In some embodiments, the undesired rotation motion is around the device normal.

In some embodiments, a device further comprises a Wide camera having a field of view FOV_{W} larger than a field of view FOV_{T} of the folded Tele camera.

In some embodiments, the compensating of the undesired rotational motion includes compensating the undesired rotational motion in three directions.

In some embodiments, the actuator for moving the component of the folded Tele camera to compensate for the device's undesired rotational motion is the OPFE actuator for tilting the OPFE in one or more directions to direct a point of view (POV) of the folded Tele camera towards a segment of a scene.

In some embodiments, the moving of the component of the folded Tele camera to compensate for the device's undesired rotational motion includes moving the lens.

In some embodiments, the moving of the component of the folded Tele camera to compensate for the device's undesired rotational motion includes moving the image sensor.

In some embodiments, a device further comprises a processing unit configured to perform a coordinate transformation to align coordinates of the folded Tele camera with coordinates of the handheld device or vice versa.

In some embodiments, a device further comprises a processing unit configured to perform a coordinate transformation that aligns coordinates of a reference coordinate system with coordinates of the handheld device and coordinates of the folded Tele camera.

In some embodiments, the coordinate transformation is performed using Rodrigues' rotation formula.

In some embodiments, the motion sensor includes an inertial measurement unit (IMU).

In some embodiments, a device further comprises an application processor configured to provide POV control signal to the OPFE actuator for tilting the OPFE.

### BRIEF DESCRIPTION OF THE DRAWINGS

Non-limiting examples of embodiments disclosed herein are described below with reference to figures attached hereto that are listed following this paragraph. The drawings and descriptions are meant to illuminate and clarify embodiments disclosed herein, and should not be considered limiting in any way. Like elements in different drawings may be indicated like numerals.
FIG. 1A shows schematically a known folded scanning camera from a perspective view;
FIG. 1B shows the OPFE in the folded Tele camera of FIG. 1A after rotation by 30 degrees from a zero position;
FIG. 1C shows a scanning camera such as shown in FIGS. 1A-B integrated as a "rear" or "world-facing" camera in a smartphone;
FIG. 2A shows exemplarily a smartphone including a first, scanning folded Tele camera at a zero position, as well as a second, Wide camera;
FIG. 2B shows the smartphone of FIG. 2A with the folded Tele camera at a non-zero position;
FIG. 2C shows the smartphone of FIG. 2A with the folded Tele camera at another non-zero position;
FIG. 3A shows a 2-dimensional (2D) chart used to derive a coordinate system for the folded Tele camera;
FIG. 3B shows impact of rotational device motion caused by hand shake on the 2D chart of FIG. 3A;
FIG. 3C shows in a flow chart main steps of a method for scanning folded Tele camera OIS disclosed herein;
FIG. 4A shows schematically in a block diagram an embodiment of a handheld device that includes multi-aperture cameras with at least one scanning folded Tele camera disclosed herein;
FIG. 4B shows schematically in a block diagram another embodiment of a handheld device that includes multi-aperture cameras with at least one scanning folded Tele camera disclosed herein.

### DETAILED DESCRIPTION

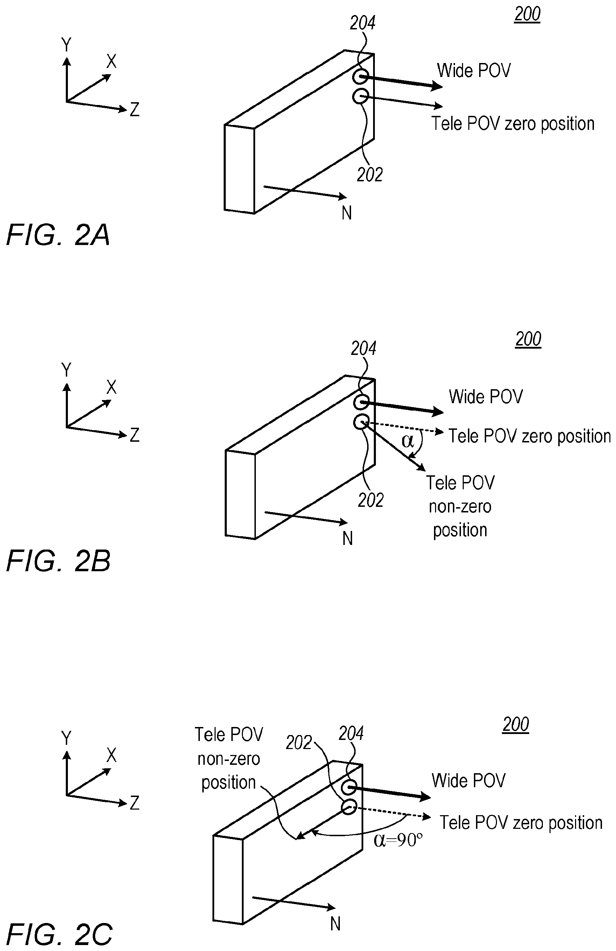

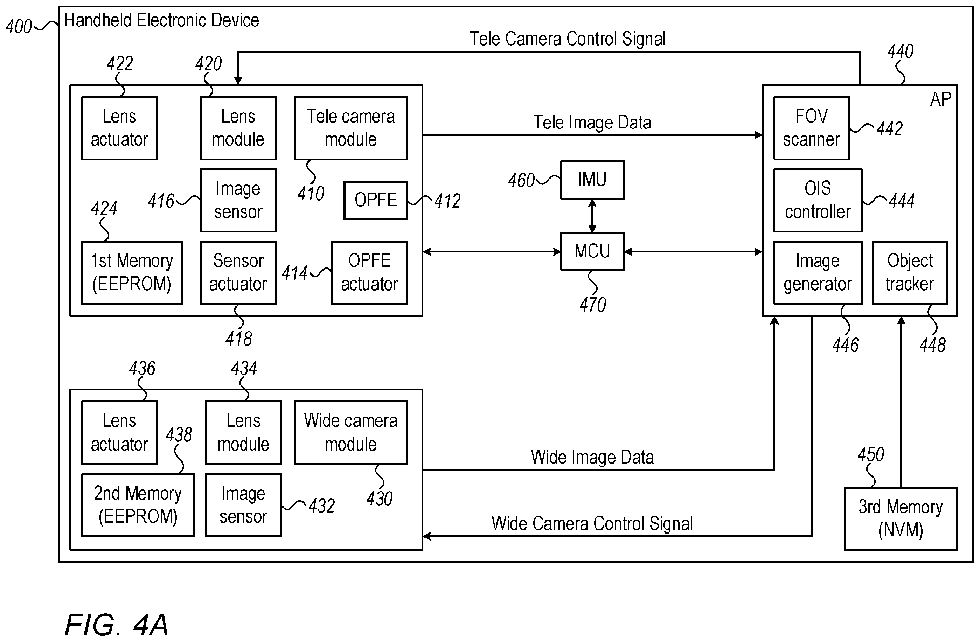

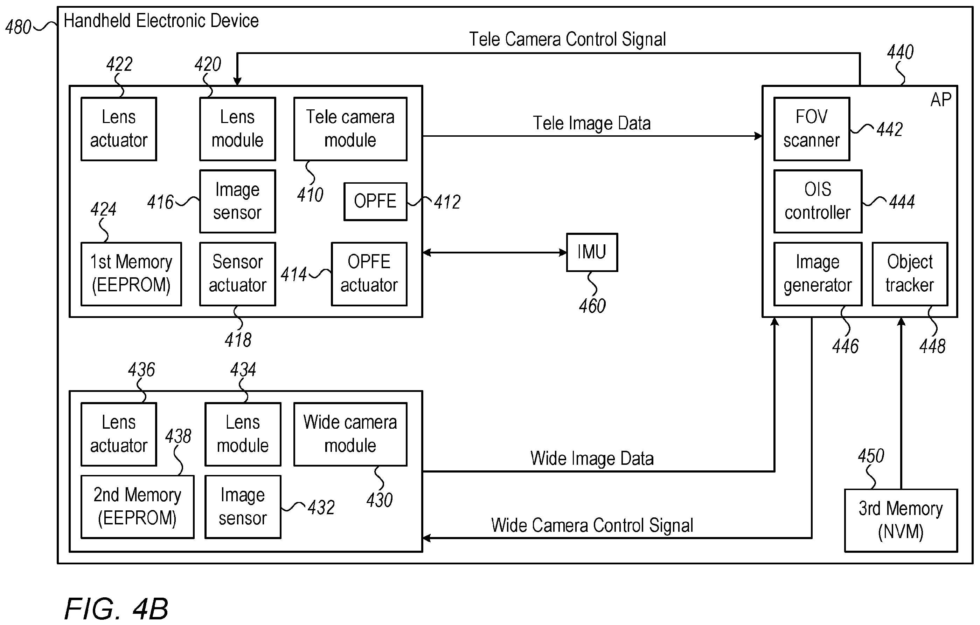

FIG. 2A shows exemplarily a smartphone **200** comprising a STC **202** at a zero position, and a Wide camera **204.** Wide camera **204** is not a scanning camera and its POV ("POV_{W}") is parallel to a device normal N (parallel to Z-axis) of the smartphone. Device normal N is parallel (or antiparallel) to a normal onto a surface of smartphone **200** that has the largest area. A coordinate system of the IMU of smartphone **200** (such as IMU **460** in FIGS 4A and 4B, not shown here) may be aligned with a coordinate system of smartphone **200** such as the coordinate system shown in FIG. 2A, where the three axes of the coordinate system are parallel to the three symmetry axes of smartphone **200,** , so that the Z axis of the IMU's (and smartphone **200**'s) coordinate system is parallel to POVw. The POV of STC **202** ("POV_{T}") is directed its zero position ("POV_{T,0}"), corresponding to an OPFE rotation state such as shown in FIG. 1A. With POV_{T} at zero position, the coordinate systems of IMU, Wide camera **204** and STC **202** align.

In a first exemplary method for OIS ("Example 1"), consider OIS for Wide camera **204** that (for the sake of simplicity) may correct for pitch rotation only. For detecting the amount of undesired hand motion, one could read out the value for pitch rotation around the X axis from the IMU ("X_{IMU}") and move e.g. the lens in one particular direction (dir₁) by a particular amount, wherein the amount (or stroke) of movement is proportional to X_{IMU}, i.e. the lens stroke Sw fulfills S_{W} = C_{W}· X_{IMU} (with some constant C_{W}). The same holds for OIS of STC **202** at zero position. By moving the lens by S_{T} = C_{T}· X_{IMU} (with some constant C_{T}) in dir₁ the hand motion is compensated.

FIG. 2B shows smartphone **200** with STC **202** at a non-zero position. POV_{T} has an angle of α degrees with respect to POV_{W}. For example, for α = 30 degrees, this corresponds to an OPFE rotation state such as shown in FIG. 1B. The coordinate systems of IMU, Wide camera **204** and STC **202** do not align anymore.

Consider Example 1 (hand motion in pitch direction) with STC **202** at a non-zero position. OIS for Wide camera **204** may be performed as in Example 1. However, for OIS of STC **202,** the method of Example 1 does not allow to perform hand motion compensation anymore, i.e. there is (in general) no C_{T} so that by moving the Tele lens by S_{T} = C_{T}· X_{IMU}, the hand motion is compensated. This is because the coordinate systems of STC 202 and the IMU are not aligned anymore.

For a second exemplary method for OIS ("Example 2"), refer to FIG. 2C. Compared to FIG. 2A, POV_{T} is rotated by 90 degree around the Y axis, i.e. POV_{T} and POVw are perpendicular to each other. As in Example 1, we consider OIS for the Wide camera for correction of pitch rotation only. Hand motion can be fully compensated by reading the IMU's value for rotation X_{IMU} and by moving a lens of the Wide camera (not shown) by S_{W} = C_{W}· X_{IMU} (with some constant C_{W}) in dir₁. However, the hand motion cannot be compensated by moving a lens of the STC (not shown, but similar to lens 102) by S_{T} = C_{T}· X_{IMU} (with some constant C_{T}) in dir₁. Instead, the rotation direction must be modified from dir₁ to a particular direction dir₂ which is different from dir₁. The hand motion can be compensated by moving the STC lens by S_{T} = C_{T}· X_{IMU} in dir₂. In general, for a STC the OIS axes depend on the POV or scanning state of the STC and are thus not constant, as it is the case for a Wide camera.

FIG. 3A shows a 2-dimensional (2D) chart **320** for deriving a coordinate system for a STC. An aperture **322** of the STC is located at coordinates (0, 0, 0). A zero state STC POV_{T} (POV_{T,0} ) **324** corresponds to a first optical path which is parallel to a device normal N (see FIG. 2A-C) and may have the coordinates (0, 0, EFL_{T}), with EFL_{T} being the EFL of the STC. FOV_{T} 326 corresponds to the FOV_{T} of the STC at POV_{T,0} **324.** A desired or target POV_{T} **328** ("POV_{T,T}") with corresponding FOV_{T} **332** is shown as well.

FIG. 3B shows 2D chart **320** of FIG. 3A after the handheld device that includes the STC underwent a rotational "roll" motion around the Z axis, e.g. because of a user's hand motion. POV_{T,0} **324** did not undergo any change. However, the corresponding FOV_{T} changed to a rotated FOV_{T} **326'.** In contrast, the rotational motion changed POV_{T,T} **328** to POV_{T,T} **328'.** The change of a POV such as POV_{T,T} **328** in response to a rotational device motion depends not only on the angle or amount of rotation, but also on the position of POV_{T}.

FIG. 3C shows in a flow chart main steps of a method for STC OIS disclosed herein.

In a first step **302,** a command triggered by a human user or by a program and processed by a FOV scanner **442** (FIG. 4A) directs FOV_{T} to a region of interest (ROI) within a scene. The scanning may be performed by rotating an OPFE with an OPFE actuator **414** (FIG. 4A). The FOV scanning by OPFE rotation is not performed instantaneously, but requires some settling time, which may be about 1-50 ms for scanning 2-5 degrees and about 5-500 ms for scanning 10-45 degrees. After the settling time, the STC is operational for capturing Tele images. The STC may be focused to an object by a user command or autonomously. The STC's scanning direction may be given by an initial (or target) POV vector P^{I}.

In step **304,** the IMU is read out and provides rotational movements around the Pitch, Yaw and Roll directions, i.e. X_{IMU}, Y_{IMU} and Z_{IMU} respectively. Usually, IMU provides data on the angular acceleration which is to be integrated for determining the rotation angle. The IMU data may be used to calculate the undesired rotational motion of the device.

In step **306,** a coordinate transformation is performed. The coordinate transformation is required because the STC's POV change caused by an undesired rotational motion of the device and the sensing of the undesired rotational motion occur in different coordinate systems.

A processing unit such as an AP or a MCU may be configured for performing the coordinate transformation (e.g. AP **440** of device **400** or device **480,** or MCU **470** of device **400** in FIG. 4A). In some examples, an AP or MCU may solve the below equations analytically, or AP or MCU may use a polynomial fit or a linear fit for solving the equations approximately. In other examples, the AP or MCU may not perform calculations but use a Look Up Table (LUT) for coordinate transformation. In some examples and such as e.g. shown in FIG. 4A, the coordinate transformation may be performed by a MCU such as MCU **470** connected to the STC module **410.**

In some examples, the transformation may be performed in order to express the coordinates of the STC in the coordinate system of the IMU. Device rotations and compensation motions may then be calculated in the IMU's coordinate system.

In some examples, a 2D chart such as chart **320** shown in FIG. 3B may be used to express the coordinates of the STC in the IMU's coordinate system. Chart **320** may resemble a calibration chart for calibrating the STC or for calibrating a dual-camera, e.g. including a folded Tele camera and a Wide camera. STC aperture **322** may be located at (0, 0, 0). The handheld device may be pointed towards chart **320** in "landscape" direction, i.e. with reference to the coordinate system of FIG. 3B, the long side of a smartphone as shown in FIG. 1C may be parallel to the X axis and the short side parallel to the Y axis, with the STC aperture pointing towards the chart in Z direction. All POVs that the STC can reach are given by "POV vectors" or "camera pointing vector" P which are pointing to coordinates lying on chart **320.** The coordinates of the zero state position may be (0, 0, EFL_{T}) with EFL_{T} being the EFL of the STC. At zero position, the coordinates of the IMU (and of the handheld device) overlap with the STC's coordinates.

If the STC is directed to a non-zero POV, a coordinate transform from the IMU's to the STC's coordinates must be performed. In some examples, Rodrigues' rotation formula may be used. The IMU's pitch/yaw/roll rotation values may be named "hnd_pitch", "hnd_yaw" and "hnd_roll". IMU provides hnd_pitch, hnd_yaw and hnd_roll in a coordinate system having the following unit vectors: $Pitch unit vector {R}_{P} : {R}_{P} = \left(1, 0, 0\right) ,$ $Yaw unit vector {R}_{Y} : {R}_{Y} = \left(0, 1, 0\right) ,$ $Roll unit vector {R}_{R} : {R}_{R} = \left(0, 0, 1\right) .$

In general, OIS corrects small angles only. Therefore, in some situations and approximately, one may treat the pitch/yaw/roll rotations independently. For any (slight) rotation of the device, Rodrigues' rotation formula may be applied to pitch/yaw/roll rotations independently, wherein the (slight) rotation may be represented by the sum over the pitch/yaw/roll rotations. A hand motion only by hnd_pitch, or only by hnd_yaw or only by hnd_roll (in the IMU's coordinates R_{P}, R_{Y} and R_{R}) applied to any initial POV vector P^{I} may result in the following final POV vector P^{F} ("cross(x, y)" indicates the cross product of vectors x and y, "dot(x, y)" indicates the dot product of vectors x and y):
POV vector P^{F}_{P} after rotation by hnd_pitch around R_{P} (hnd_yaw, hnd_roll = 0): ${{P}^{F}}_{P} = \left({P}^{I}⋅cos\left(hnd_pitch\right)+cross\left({P}^{I}, {R}_{P}\right)⋅sin\left(hnd_pitch\right)+{R}_{P}⋅\left(dot\left({P}^{I}, {R}_{P}\right)⋅\left(1-cos\left(hnd_pitch\right)\right)\right)\right) ;$
POV vector P^{F}_{Y} after rotation by hnd_yaw around R_{Y} (hnd_pitch, hnd_roll = 0): ${{P}^{F}}_{Y} = \left({P}^{I}⋅cos\left(hnd_yaw\right)+cross\left({P}^{I}, {R}_{Y}\right)⋅sin\left(hnd_yaw\right)+{R}_{Y}⋅\left(dot\left({P}^{I}, {R}_{Y}\right)⋅\left(1-cos\left(hnd_yaw\right)\right)\right)\right) ;$
POV vector P^{F}_{R} after rotation by hnd_roll around R_{R} (hnd_pitch, hnd_yaw = 0): ${{P}^{F}}_{R} = \left({P}^{I}⋅cos\left(hnd_roll\right)+cross\left({P}^{I}, {R}_{R}\right)⋅sin\left(hnd_roll\right)+{R}_{R}⋅\left(dot\left({P}^{I}, {R}_{R}\right)⋅\left(1-cos\left(hnd_roll\right)\right)\right)\right) .$
For small angles, a final POV vector (before normalization) P^{F}' that underwent both Pitch, Yaw and Roll rotations may be given by: ${P}^{F} ′ = {P}^{I} + \left({P}^{I}-{{P}^{F}}_{P}\right) + \left({P}^{I}-{{P}^{F}}_{Y}\right) + \left({P}^{I}-{{P}^{F}}_{R}\right)$ A normalization may be performed in order to ensure that the final POV vector P^{F} comes to lie on chart **320.** In some examples, P^{F} may be obtained by normalizing P^{F}' with EFL_{T}/P^{F}' _{z}, wherein P^{F}'_{z} is the z-component of P^{F}', i.e.: ${P}^{F} = {P}^{F} ′ ⋅ {EFL}_{T} / {P}^{F} {′}_{z} ⋅$

From the above equations it is evident that for compensating for undesired rotational hand motion in a STC, in contrast for a non-scanning camera like e.g. Wide camera **204,** where one may compensate the undesired rotational hand motion around yaw and pitch only, one must compensate rotational hand motion around the three directions yaw, pitch and roll.

In other examples for coordinate transformation, the transformation may be performed to express the coordinates of the IMU in the coordinate system of the STC. Hand motion rotations and compensation motions may then be calculated in the STC's coordinate system. As above, Rodrigues' rotation formula may be used.

In yet other examples for coordinate transformation, the transformation may be to a third coordinate system ("reference system"). Both the coordinates of the STC and of the IMU are expressed in the reference coordinate system. Hand motion rotations and compensation motions may then be calculated in the reference coordinate system. As above, Rodrigues' rotation formula may be used.

In step **308,** movement for OIS may be performed. In some examples, OIS may be performed by moving the STC's OPFE. In other examples, a lens such as lens **102** and/or an image sensor such as image sensor **106** may be moved for OIS. Assuming ideal OIS, the movement of OPFE and/or lens and/or sensor may lead to a POC vector modification P_{OIS} that exactly cancels the effect of the hand motion onto the POV vector, i.e.: P^{F} + P^{OIS} = P^{I}. So after performing step **308** the STC is again directed towards P^{I}. In other examples, the entire STC may be moved for OIS. I.e. OPFE, lens and image sensor are moved together as one unit for OIS.

In some embodiments, steps **304 - 308** may be repeated for stabilizing the STC continuously. The OIS cycles that include steps **304 - 308** may be performed at frequencies of e.g. 500Hz - 100 kHz. STC images or image streams are captured while the above OIS method is performed.

In some embodiments, a sensor actuator may actuate the image sensor for correcting POV aberrations of a STC image. As described in the co-owned international patent application PCT/IB2021/056311, a STC image undergoes POV aberrations. One aberration is a rotation of the STC image on the image sensor ("rotational POV aberration"). When an undesired rotational hand motion is compensated by moving an OPFE as disclosed herein, the moving of the OPFE introduces a POV aberration. A sensor actuator may be used to rotate an image sensor around a normal of the image sensor for compensating the rotational POV aberration.

FIG. 4A shows schematically an embodiment of a handheld device numbered **400** and including multi-aperture cameras with at least one STC disclosed herein. Device **400** comprises a STC module **410** that includes an OPFE **412** as well as an OPFE actuator **414** for FOV scanning and/or OIS, and a Tele lens module **420** that forms a Tele image recorded by an image sensor **416.** A Tele lens actuator **422** may move lens module **420** for focusing and/or OIS. Handheld device **400** may further comprise an application processor (AP) **440** that includes a FOV scanner **442,** an OIS controller **444,** an image generator **446** and an object tracker **448.**

In other examples, device **400** may comprise a STC that includes two OPFEs as well as an OPFE actuator for each of the two OPFEs. In some examples, the OPFE actuators may actuate the OPFEs for performing OIS as disclosed herein. In other examples, a lens actuator may actuate a lens or a sensor actuator may actuate an image sensor for performing OIS as disclosed herein. A STC camera based on two OPFEs is described for example in PCT/IB2021/054186. In such a STC, the optical path within the camera is folded twice, so that one speaks of a double-folded scanning Tele camera.

Handheld device **400** further comprises a Wide (or Ultra-Wide) camera module **430** which includes a second lens module **434** that forms an image recorded by a second image sensor **432.** A second lens actuator **436** may move lens module **434** for focusing and/or OIS. In some examples, the STC can scan the entire FOV_{W} or an even larger FOV. In other examples, the STC can scan a FOV that is smaller than FOV_{W}.

In some examples, object tracker **448** may be configured to track an object in FOV_{W} and provide tracking data to FOV scanner **442** and/or the OIS controller **444.** Based on the tracking data, FOV scanner **442** and/or the OIS controller **444** may provide control signals to OPFE actuator **414** which actuate an OPFE rotation for tracking an object with the STC. As an example, one may track an object so that it centers at the center of FOV_{T}. Examples 3 - 7 described below refer to this tracking scenario, where the Wide camera image data is used to provide tracking information which triggers Tele FOV scanning.

In some examples, tracking information and OIS information may interfere and coordination between tracking and OIS may be required for achieving a desired object tracking and/or OIS outcome.

As a third exemplary method for OIS, consider a device such as device **400** or **480** including a Wide camera and a STC both not having OIS. The STC may track an object at rest so that the object's center is located at the center of FOV_{T}. The tracking may occur in real-time (RT), i.e. we assume that there is no delay between the detection of a tracking deviation and its compensation. A device's rotational motion caused by a user's hand motion will be detected as an object movement in the Wide camera. In response, a tracking movement of the STC will be triggered and the object's location in the Tele FOV will be updated. In conclusion, in the RT scenario the object tracker performs OIS in a sense that the object will always be located in the center of FOV_{T} and will not be affected from hand motion of a user.

As a fourth exemplary method for OIS, consider a device such as device **400** or **480** including a Wide camera not having OIS and a STC having OIS. As in example 3, we assume RT object tracking on FOV_{W} so that a (non-moving) object's center is located at the center of FOV_{T}. OIS may be performed in RT as well. A device's rotational motion caused by a user's hand motion will be detected as an object movement in the Wide camera. In response, a tracking movement ΔT for the STC will be triggered. Simultaneously, the device's rotational motion will also be detected by the STC's OIS and an OIS movement ΔOIS of the STC will be triggered in response. OIS movement may be performed according the OIS method disclosed herein. ΔT and ΔOIS are identical in terms of direction and magnitude, i.e. a STC movement of 2·ΔT = 2·ΔOIS will be triggered, which is double the amount of movement required (i) for keeping the object at the center of FOV_{T} (desired tracking outcome) and (ii) for suppressing the impact of hand motion on the STC image (desired OIS outcome). In conclusion, the desired outcome is not achieved for either Tele tracking or Tele OIS. Therefore, in some examples, the STC's OIS is disabled when using object tracking.

As a fifth exemplary method for OIS, consider a device such as device **400** or **480** including a Wide camera not having OIS and a STC having OIS. Object tracking may be performed on FOVw so that a (non-moving) object's center is located at the center of FOV_{T}. However, Object tracking and OIS may not be performed in RT. In general, OIS is performed at higher frequencies than object tracking. As an example, OIS may be performed at 500Hz - 100 kHz and object tracking may be performed at 1 Hz - 100 Hz. In some examples, for preventing undesired interference between OIS and object tracking, one may disable OIS when using object tracking. In other embodiments, one may separate control of OIS and object tracking in the frequency domain. As an example, for device's rotational motion caused by a user's hand motion that occurs at a frequency higher than e.g. 30Hz, one may use OIS for device motion correction. For frequencies lower than e.g. 30Hz one may not use OIS for device motion correction. Instead the low frequency device motion will be compensated by the object tracker.

As a sixth exemplary method for OIS, consider a device such as device **400** or **480** including a Wide camera having OIS and a STC not having OIS. Object tracking may be performed on FOV_{W} so that a (non-moving) object's center is located at the center of FOV_{T}. Object tracking and OIS may be performed in RT. As of the Wide camera's OIS, a device's rotational motion caused by a user's hand motion will have no impact on the Wide image stream. As the object does not move in FOV_{W}, no tracking movement of the STC will be triggered. In conclusion, there is no hand motion compensation and the object will not be located at the center of FOV_{T} anymore, leading to an undesired object tracking outcome. In some examples for preventing this undesired outcome, one may disable the Wide camera's OIS when performing object tracking. In other examples, object tracking control signals that are supplied to the STC may additionally include the Wide camera's OIS control signals. By superimposing the two signals, the benefits of both Wide camera OIS and proper STC tracking may be enjoyed.

As a seventh exemplary method for OIS, consider a device such as device **400** or **480** with both the Wide camera and the STC having OIS. We assume RT tracking so that an object's center is located at the center of FOV_{T}. A device's rotational motion caused by a user's hand motion will be corrected by an OIS movement in both the Wide camera and the STC in RT. In conclusion, a user's hand motion will not impact the desired output of the object tracker.

Calibration data may be stored in a first memory **424,** e.g. in an EEPROM (electrically erasable programmable read only memory) and/or in a second memory **438** and/or in a third memory **450** such as a NVM (non-volatile memory). The calibration data may comprise calibration data between Wide camera **430** and STC **410.** The calibration data may further comprise calibration data between an OPFE's position and the STC's corresponding POV.

Handheld device **400** further comprises an inertial measurement unit (IMU, for example a gyroscope) **460** that supplies motion information of **400.** For example, a microcontroller unit (MCU) **470** may be used to read and process data of IMU **460.** In some examples, the MCU may be controlled by an OIS controller **444** which is part of AP **440.** In some examples, step **304** and step **306** may be performed by the MCU and step **308** may be performed by OPFE actuator **414** (and/or lens actuator **436** and/or sensor actuator **418** in case OIS is performed by lens shift or image sensor shift respectively). In some examples, MCU **470** may be integrated into AP **440.**

Another embodiment of a handheld device numbered **480** and comprising a multi-aperture camera with at least one STC as disclosed herein is shown in FIG. 4B. An MCU (not shown) for reading and processing motion data from IMU **460** and for supplying OIS control signals may be included into STC module **410,** e.g. into the driver of OPFE actuator **414.**

In some examples, additional data may be used for hand motion estimation. Additional data may e.g. be image data from the Wide camera **430** or data from additional sensing units present in the handheld device.

In some examples, image data from Wide camera **430** may be used to estimate an "optical flow" from a plurality of images as known in the art, wherein OIS controller **444** may use the data of the optical flow together with data from IMU **460** for estimating motion of device **400.** In other examples, only optical flow data estimated from image data of camera **410** and/or camera **430** may be used for estimating motion of device **400.**

Image generator **446** may be configured to generate images and image streams. In some examples, image generator **446** may be configured to use only first image data from camera **430.** In other examples, image generator **446** may use image data from camera **410** and/or camera **430.**

While this disclosure has been described in terms of certain embodiments and generally associated methods, alterations and permutations of the embodiments and methods will be apparent to those skilled in the art. The disclosure is to be understood as not limited by the specific embodiments described herein, but only by the scope of the appended claims.

Unless otherwise stated, the use of the expression "and/or" between the last two members of a list of options for selection indicates that a selection of one or more of the listed options is appropriate and may be made.

It should be understood that where the claims or specification refer to "a" or "an" element, such reference is not to be construed as there being only one of that element.

Furthermore, for the sake of clarity the term "substantially" is used herein to imply the possibility of variations in values within an acceptable range. According to one example, the term "substantially" used herein should be interpreted to imply possible variation of up to 5% over or under any specified value. According to another example, the term "substantially" used herein should be interpreted to imply possible variation of up to 2.5% over or under any specified value. According to a further example, the term "substantially" used herein should be interpreted to imply possible variation of up to 1% over or under any specified value.

Citation or identification of any reference in this application shall not be construed as an admission that such reference is available as prior art to the present invention.

## Claims

1. A device (200, 400, 480), comprising:
a folded Tele camera (202, 410) comprising an optical path folding element, OPFE (412), for folding light from a first optical path that forms an angle of less than 90 degrees to a normal of the device toward a second optical path substantially orthogonal to the normal of the device, a lens (420) with a lens optical axis along the second optical path, and an image sensor (416), wherein the device is a handheld electronic device (200, 400, 480);
an OPFE actuator (414) for tilting the OPFE in one or more directions to direct a point of view, POV, of the folded Tele camera towards a segment of a scene;
a motion sensor for sensing an undesired rotational motion of the device;
a processing unit configured to perform a coordinate transform to align coordinates of the folded Tele camera with coordinates of the device or vice versa and to calculate compensation motion, wherein the compensation motion depends on the undesired rotational motion of the device and on the folded Tele camera POV; and
at least one actuator for moving at least one component of the folded Tele camera according to the compensation motion to compensate for the undesired rotational motion of the device.

2. The device of claim 1, wherein the undesired rotation motion is around the device normal.

3. The device of claim 1, further comprising a Wide camera having a field of view FOV_{W} larger than a field of view FOV_{T} of the folded Tele camera.

4. The device of claim 1, wherein the compensating of the undesired rotational motion includes compensating the undesired rotational motion in three directions.

5. The device of claim 1, wherein the at least one actuator for moving the at least one component of the folded Tele camera to compensate for the device undesired rotational motion includes an OPFE actuator that moves the OPFE.

6. The device of claim 1, wherein the at least one actuator for moving the at least one component of the folded Tele camera to compensate for the device undesired rotational motion includes a lens actuator that moves the lens.

7. The device of claim 1, wherein the at least one actuator for moving the at least one component of the folded Tele camera to compensate for the device undesired rotational motion includes a sensor actuator that moves the image sensor.

8. A device (200, 400, 480), comprising:
a folded Tele camera (202, 410) comprising an optical path folding element, OPFE (412), for folding light from a first optical path that forms an angle of less than 90 degrees to a normal of the device toward a second optical path substantially orthogonal to the normal of the device, a lens (420) with a lens optical axis along the second optical path, and an image sensor (416), wherein the device is a handheld electronic device (200, 400, 480);
an OPFE actuator (414) for tilting the OPFE in one or more directions to direct a point of view, POV, of the folded Tele camera towards a segment of a scene;
a motion sensor for sensing an undesired rotational motion of the device;
a processing unit configured to perform a coordinate transformation that aligns coordinates of a reference coordinate system with coordinates of the device and coordinates of the folded Tele camera and that calculates compensation motion, wherein the compensation motion depends on the undesired rotational motion of the device and on the folded Tele camera POV; and
at least one actuator for moving at least one component of the folded Tele camera according to the compensation motion to compensate for the undesired rotational motion of the device.

9. The device of claim 1, wherein the coordinate transformation is performed using Rodrigues' rotation formula.

10. The device of claim 1, wherein the coordinate transformation is performed by an analytical solution.

11. The device of claim 1, wherein the coordinate transformation is performed by an approximate solution.

12. The device of claim 1, wherein the motion sensor includes an inertial measurement unit, IMU.

13. The device of claim 1, further comprising an application processor configured to provide POV control signals to the OPFE actuator for tilting the OPFE.

14. The device of claim 1, wherein the folded Tele camera is a double-folded Tele camera comprising two OPFEs.

15. The device of claim 3, wherein Wide image data is used to track an object in FOV_{W} and wherein the tracking information is used to direct the POV of the folded Tele camera towards the tracked object for object tracking with the folded Tele camera.

## Patentansprüche

1. Vorrichtung (200, 400, 480), umfassend:
eine gefaltete Telekamera (202, 410), die ein Lichtwegfaltelement, OPFE (412), um Licht aus einem ersten Lichtweg zu falten, der einen Winkel von mindestens 90 Grad zu einer Normalen der Vorrichtung in Richtung auf einen zweiten Lichtweg bildet, der zu der Normalen der Vorrichtung im Wesentlichen orthogonal ist, eine Linse (420) mit einer optischen Linsenachse entlang des zweiten Lichtwegs und einen Bildsensor (416) umfasst, wobei die Vorrichtung eine handgehaltene elektronische Vorrichtung (200, 400, 480) ist;
ein OPFE-Stellglied (414), um das OPFE in einer oder mehreren Richtungen schräg zu stellen, um einen Blickwinkel, POV, der gefalteten Telekamera in Richtung auf ein Segment einer Szene zu richten;
einen Bewegungssensor zum Wahrnehmen einer unerwünschten Drehbewegung der Vorrichtung;
eine Verarbeitungseinheit, die dazu konfiguriert ist, eine Koordinatentransformation auszuführen, um die Koordinaten der gefalteten Telekamera auf die Koordinaten der Vorrichtung oder umgekehrt auszurichten und eine Ausgleichsbewegung zu berechnen, wobei die Ausgleichsbewegung von der unerwünschten Drehbewegung der Vorrichtung und von dem POV der gefalteten Telekamera abhängig ist; und
mindestens ein Stellglied, um mindestens eine Komponente der gefalteten Telekamera gemäß der Ausgleichsbewegung zu bewegen, um die unerwünschte Drehbewegung der Vorrichtung auszugleichen.

2. Vorrichtung nach Anspruch 1, wobei die unerwünschte Drehbewegung um die Normale der Vorrichtung herum erfolgt.

3. Vorrichtung nach Anspruch 1, ferner umfassend eine Weitwinkel-Kamera mit einem Sehfeld FOV_{W}, das größer als ein Sehfeld FOV_{T} der gefalteten Telekamera ist.

4. Vorrichtung nach Anspruch 1, wobei der Ausgleich der unerwünschten Drehbewegung den Ausgleich der unerwünschten Drehbewegung in drei Richtungen umfasst.

5. Vorrichtung nach Anspruch 1, wobei das mindestens eine Stellglied zum Bewegen der mindestens einen Komponente der gefalteten Telekamera, um die unerwünschte Drehbewegung der Vorrichtung auszugleichen, ein OPFE-Stellglied umfasst, welches das OPFE bewegt.

6. Vorrichtung nach Anspruch 1, wobei das mindestens eine Stellglied zum Bewegen der mindestens einen Komponente der gefalteten Telekamera, um die unerwünschte Drehbewegung der Vorrichtung auszugleichen, ein Linsenstellglied umfasst, das die Linse bewegt.

7. Vorrichtung nach Anspruch 1, wobei das mindestens eine Stellglied zum Bewegen der mindestens einen Komponente der gefalteten Telekamera, um die unerwünschte Drehbewegung der Vorrichtung auszugleichen, ein Sensorstellglied umfasst, das den Bildsensor bewegt.

8. Vorrichtung (200, 400, 480), umfassend:
eine gefaltete Telekamera (202, 410), die ein Lichtwegfaltelement, OPFE (412), um Licht aus einem ersten Lichtweg zu falten, der einen Winkel von mindestens 90 Grad zu einer Normalen der Vorrichtung in Richtung auf einen zweiten Lichtweg bildet, der zu der Normalen der Vorrichtung im Wesentlichen orthogonal ist, eine Linse (420) mit einer optischen Linsenachse entlang des zweiten Lichtwegs und einen Bildsensor (416) umfasst, wobei die Vorrichtung eine handgehaltene elektronische Vorrichtung (200, 400, 480) ist;
ein OPFE-Stellglied (414), um das OPFE in einer oder mehreren Richtungen schräg zu stellen, um einen Blickwinkel, POV, der gefalteten Telekamera in Richtung auf ein Segment einer Szene zu richten;
einen Bewegungssensor zum Wahrnehmen einer unerwünschten Drehbewegung der Vorrichtung;
eine Verarbeitungseinheit, die dazu konfiguriert ist, eine Koordinatentransformation auszuführen, welche die Koordinaten eines Bezugskoordinatensystems auf die Koordinaten der Vorrichtung und die Koordinaten der gefalteten Telekamera ausrichtet, und die eine Ausgleichsbewegung berechnet, wobei die Ausgleichsbewegung von der unerwünschten Drehbewegung der Vorrichtung und von dem POV der gefalteten Telekamera abhängig ist; und
mindestens ein Stellglied, um mindestens eine Komponente der gefalteten Telekamera gemäß der Ausgleichsbewegung zu bewegen, um die unerwünschte Drehbewegung der Vorrichtung auszugleichen.

9. Vorrichtung nach Anspruch 1, wobei die Koordinatentransformation unter Verwendung einer Rodrigues-Drehformel ausgeführt wird.

10. Vorrichtung nach Anspruch 1, wobei die Koordinatentransformation durch eine analytische Lösung ausgeführt wird.

11. Vorrichtung nach Anspruch 1, wobei die Koordinatentransformation durch eine Näherungslösung ausgeführt wird.

12. Vorrichtung nach Anspruch 1, wobei der Bewegungssensor eine Trägheitsmesseinheit, IMU, umfasst.

13. Vorrichtung nach Anspruch 1, ferner umfassend einen Anwendungsprozessor, der dazu konfiguriert ist, POV-Steuersignale für das OPFE-Stellglied bereitzustellen, um das OPFE schräg zu stellen.

14. Vorrichtung nach Anspruch 1, wobei die gefaltete Telekamera eine doppelt gefaltete Telekamera ist, die zwei OPFEs umfasst.

15. Vorrichtung nach Anspruch 3, wobei Weitwinkelbilddaten verwendet werden, um ein Objekt in dem FOV_{W} zu verfolgen, und wobei die Verfolgungsinformationen verwendet werden, um den POV der gefalteten Telekamera in Richtung auf das verfolgte Objekt zur Objektverfolgung mit der gefalteten Telekamera zu richten.

## Revendications

1. Dispositif (200, 400, 480), comprenant :
une télécaméra pliée (202, 410) comprenant un élément de pliage de trajet optique, OPFE (412), pour plier la lumière provenant d'un premier trajet optique qui forme un angle de moins de 90 degrés avec une normale du dispositif en direction d'un deuxième trajet optique substantiellement orthogonal à la normale du dispositif, une lentille (420) dotée d'un axe optique de lentille le long du deuxième trajet optique, et un capteur d'image (416), le dispositif étant un dispositif électronique portatif (200, 400, 480) ;
un actionneur OPFE (414) pour incliner l'OPFE dans une ou plusieurs directions pour diriger un point de vue, POV, de la télécaméra pliée en direction d'un segment d'une scène ;
un capteur de mouvement pour capter un mouvement rotatif indésirable du dispositif ;
une unité de traitement configurée pour effectuer une transformation de coordonnées pour aligner les coordonnées de la télécaméra pliée sur les coordonnées du dispositif ou vice versa et pour calculer un mouvement de compensation, le mouvement de compensation dépendant du mouvement de rotation indésirable du dispositif et du POV de la télécaméra pliée ; et
au moins un actionneur pour déplacer au moins un composant de la télécaméra pliée selon le mouvement de compensation pour compenser le mouvement de rotation indésirable du dispositif.

2. Dispositif selon la revendication 1, dans lequel le mouvement de rotation indésirable est effectué autour de la normale du dispositif.

3. Dispositif selon la revendication 1, comprenant en outre une caméra à grand angle ayant un champ de vision FOV_{W} plus grand qu'un champ de vision FOV_{T} de la télécaméra pliée.

4. Dispositif selon la revendication 1, dans lequel la compensation du mouvement de rotation indésirable comprend la compensation du mouvement de rotation indésirable dans trois directions.

5. Dispositif selon la revendication 1, dans lequel ledit au moins un actionneur pour déplacer ledit au moins un composant de la télécaméra pliée pour compenser le mouvement de rotation indésirable du dispositif comprend un actionneur OPFE qui déplace l'OPFE.

6. Dispositif selon la revendication 1, dans lequel ledit au moins un actionneur pour déplacer ledit au moins un composant de la télécaméra pliée pour compenser le mouvement de rotation indésirable du dispositif comprend un actionneur de lentille qui déplace la lentille.

7. Dispositif selon la revendication 1, dans lequel ledit au moins un actionneur pour déplacer ledit au moins un composant de la télécaméra pliée pour compenser le mouvement de rotation indésirable du dispositif comprend un actionneur de capteur qui déplace le capteur d'image.

8. Dispositif (200, 400, 480), comprenant :
une télécaméra pliée (202, 410) comprenant un élément de pliage de trajet optique, OPFE (412) pour plier la lumière provenant d'un premier trajet optique qui forme un angle de moins de 90 degrés avec une normale du dispositif en direction d'un deuxième trajet optique substantiellement orthogonal à la normale du dispositif, une lentille (420) dotée d'un axe optique de lentille le long du deuxième trajet optique, et un capteur d'image (416), le dispositif étant un dispositif électronique portatif (200, 400, 480) ;
un actionneur OPFE (414) pour incliner l'OPFE dans une ou plusieurs directions pour diriger un point de vue, POV, de la télécaméra pliée vers un segment d'une scène ;
un capteur de mouvement pour capter un mouvement rotatif indésirable du dispositif ;
une unité de traitement configurée pour effectuer une transformation de coordonnées qui aligne les coordonnées d'un système de coordonnées de référence sur les coordonnées du dispositif et les coordonnées de la télécaméra pliée, et qui calcule un mouvement de compensation, le mouvement de compensation dépendant du mouvement de rotation indésirable du dispositif et du POV de la télécaméra pliée ; et
au moins un actionneur pour déplacer au moins un composant de la télécaméra pliée selon le mouvement de compensation pour compenser le mouvement de rotation indésirable du dispositif.

9. Dispositif selon la revendication 1, dans lequel la transformation de coordonnées est effectuée en utilisant une formule de rotation de Rodrigues.

10. Dispositif selon la revendication 1, dans lequel la transformation de coordonnées est effectuée par une solution analytique.

11. Dispositif selon la revendication 1, dans lequel la transformation de coordonnées est effectuée par une solution par approximation.

12. Dispositif selon la revendication 1, dans lequel le capteur de mouvement comprend une unité de mesure inertielle, IMU.

13. Dispositif selon la revendication 1, comprenant en outre un processeur d'application configuré pour fournir des signaux de commande de POV à l'actionneur OPFE pour incliner l'OPFE.

14. Dispositif selon la revendication 1, dans lequel la télécaméra pliée est une télécaméra doublement pliée comprenant deux OPFE.

15. Dispositif selon la revendication 3, dans lequel des données d'image à grand angle sont utilisées pour poursuivre un objet dans le FOV_{W} et dans lequel les informations de poursuite sont utilisées pour diriger le POV de la télécaméra pliée vers l'objet poursuivi pour une poursuite d'objet avec la télécaméra pliée.
